# EUROPÄISCHE PATENTSCHRIFT

(11) **EP 4 527 809 B1**
(45) Veröffentlichungstag und Bekanntmachung des Hinweises auf die Patenterteilung: **01.07.2026**
(21) Anmeldenummer: 23198558.1
(22) Anmeldetag: 20.09.2023
(51) Int. Cl.: C03C 3/118, C03C 4/00, C03C 4/12, C03C 10/04

(54) **FLUORESZIERENDES GLAS MIT HOHEM GEHALT AN CER UND ZINN**
FLUORESCENT GLASS WITH HIGH CONTENT OF CERIUM AND TIN
VERRE FLUORESCENT À HAUTE TENEUR EN CÉRIUM ET EN ÉTAIN

(43) Veröffentlichungstag der Anmeldung: 26.03.2025
(73) Patentinhaber: Ivoclar Vivadent AG, 9494 Schaan (LI)
(72) Erfinder: Dittmer, Marc, 6800 Feldkirch (AT); Ritzberger, Christian, 9472 Grabs (CH); Rampf, Markus, 7212 Seewis Dorf (CH)
(74) Vertreter: Uexküll & Stolberg

(56) Entgegenhaltungen:
- EP-A1- 1 870 384
- EP-A1- 3 696 149

## Beschreibung

Die vorliegende Erfindung betrifft Glas, das einen hohen Gehalt an Cer und Zinn hat und sich insbesondere zur Herstellung von Dentalrestaurationen eignet, deren Fluoreszenzeigenschaften weitgehend denen der natürlichen Zähne entsprechen. Die Erfindung betrifft auch ein Verfahren zur Herstellung des erfindungsgemäßen Glases, ein Verfahren zur Herstellung dentaler Restaurationen sowie die Verwendung des erfindungsgemäßen Glases als Mischungskomponente und als Dentalmaterial, insbesondere als Beschichtungsmaterial zur Herstellung dentaler Restaurationen.

Gläser werden in der Zahnheilkunde aufgrund ihrer guten optischen Eigenschaften insbesondere zur Beschichtung anderer Materialien z.B. als Malfarbe oder Glasurmaterial verwendet.

Es sind verschiedene Ansätze bekannt, um bei der Herstellung von dentalen Restaurationen die Fluoreszenzeigenschaften natürlicher Zähne in Gläsern und gegebenenfalls daraus hergestellten Glaskeramiken nachzubilden.

EP 2 944 619 A1 beschreibt ein Verfahren zur Herstellung von fluoreszierenden Lithiumsilikatgläsern. Das Verfahren beinhaltet, dass die Schmelze eines Ausgangsglases, das Cer-Ionen enthält, reduzierenden Bedingungen ausgesetzt wird. Die reduzierenden Bedingungen werden durch den Einsatz eines reduzierenden Mittels gewährleistet, das vorzugsweise ein gasförmiges reduzierendes Mittel oder ausgewählt aus der Gruppe bestehend aus organischen Salzen, Kohlenhydraten und Getreidemehlen ist.

WO 2017/032745 A1 beschreibt Lithiumsilikat-Tiefquarz-Glaskeramiken für den Einsatz in der Zahnheilkunde. Die Glaskeramiken können Färbemittel und Fluoreszenzmittel enthalten, die bevorzugt ausgewählt sind aus Bi₂O₃ und Bi₂O₅ und anorganischen Pigmenten und/oder Oxiden von d- und f-Elementen, wie z.B. den Oxiden von Mn, Fe, Co, Pr, Nd, Tb, Er, Dy, Eu und Yb.

Aus der EP 3 696 150 A1 sind Gläser bekannt, die 0,05 bis 5,0 Gew.-% Europium, berechnet als Eu₂O₃, enthalten, um den aus den Gläsern hergestellten Dentalrestaurationen vorteilhafte Fluoreszenzeigenschaften zu verleihen.

Aus W. Buchalla, "Comparative Fluorescence Spectroscopy Shows Differences in Non-Cavitated Enamel Lesions", Caries Res. 2005, 39, 150-156 ist bekannt, dass natürliche Zähne unter ultraviolettem Licht eine bläulich-weiße Fluoreszenz mit Wellenlängen im Bereich von 400 bis 650 nm zeigen.

EP 3 696 149 A1 beschreibt Gläser und Glaskeramiken mit Gehalt an Cer und Zinn, die fluoreszieren, wenn sie mit Licht einer Wellenlänge von 365 nm angeregt werden. Bei Anregung mit Licht einer Wellenlänge von 395 nm zeigen die beschriebenen Gläser und Glaskeramiken jedoch keine Fluoreszenz.

Es hat sich gezeigt, dass die aus dem Stand der Technik bekannten Gläser unzureichende Fluoreszenzeigenschaften aufweisen und insbesondere unter Licht mit einer Wellenlänge von etwa 380 bis 430 nm die Fluoreszenzeigenschaften des natürlichen Zahnmaterials nicht in ausreichendem Maße imitieren können. Es besteht insbesondere ein Bedarf an Gläsern, die auch im besonders langwelligen UV-Bereich, wie z.B. 380 bis 430 nm, gute Fluoreszenzeigenschaften aufweisen. Licht dieser Wellenlängen wird häufig als "Schwarzlicht" in Vergnügungsstätten wie Nachtclubs eingesetzt. Dort können daher Dentalrestaurationen mit unzureichenden Fluoreszenzeigenschaften unter dem Einfluss von langwelligem UV-Licht als Restaurationen erkennbar sein oder als Zahnlücken oder Defekte wahrgenommen werden.

Der Erfindung liegt die Aufgabe zugrunde, Glas bereitzustellen, das eine mit dem natürlichen Zahnmaterial vergleichbare Fluoreszenz zeigt und sich somit insbesondere zur Herstellung von dentalen Restaurationen eignet, die die Fluoreszenzeigenschaften des natürlichen Zahnmaterials bei Anregungswellenlängen im langwelligen UV-Bereich, wie z.B. 380 bis 430 nm und insbesondere 395 nm, weitgehend imitieren können. Das Glas soll sich auch als Mischungskomponenten zur Einstellung der Fluoreszenzeigenschaften anderer Gläser eignen.

Diese Aufgabe wird erfindungsgemäß gelöst durch das Glas mit Gehalt an Cer und Zinn nach den Ansprüchen 1 bis 12 sowie das Glas und die Glaskeramik nach Anspruch 13, die das erfindungsgemäße Glas enthalten. Die Erfindung betrifft auch die Verwendung der erfindungsgemäßen Gläser nach den Ansprüchen 16 und 17. Außerdem ist die Erfindung auf das Verfahren zur Herstellung der erfindungsgemäßen Gläser nach den Ansprüchen 14 und 15 sowie das Beschichtungsverfahren unter Verwendung der erfindungsgemäßen Gläser nach Anspruch 18 gerichtet.

Die Erfindung betrifft ein Glas mit Gehalt an Cer und Zinn, das sich dadurch auszeichnet, dass es die folgenden Komponenten in den angegebenen Mengen enthält:

| Komponente | Gew.-% |
|---|---|
| SiO₂ | 38,0 bis 68,0 |
| Cer, berechnet als CeO₂ | 4,0 bis 23,0 |
| Zinn, berechnet als SnO | 3,0 bis 18,0 |
| Li₂O | 1,0 bis 5,0 |
| Alkalimetalloxid Me^{I}₂O | 5,8 bis 15,9 |
| Oxid zweiwertiger Elemente Me^{II}O | 3,2 bis 10,5 |
| Oxid dreiwertiger Elemente Me^{III}₂O₃ | 3,5 bis 11,8, |

wobei
Me^{I}₂O ausgewählt ist aus Na₂O, K₂O, Rb₂O und/oder Cs₂O,
Me^{II}O ausgewählt ist aus MgO, CaO, SrO, BaO und/oder ZnO,
Me^{III}₂O₃ ausgewählt ist aus Al₂O₃, B₂O₃, Y₂O₃, La₂O₃, Dy₂O₃, Ga₂O₃ und/oder In₂O₃.

Es hat sich überraschend gezeigt, dass das erfindungsgemäße Glas gegenüber dem Stand der Technik verbesserte Fluoreszenzeigenschaften zeigt, insbesondere unter Einwirkung von UV-Licht mit einer Wellenlänge von 380 bis 430 nm, wie z.B. 395 nm. Es wurde im Rahmen der vorliegenden Erfindung festgestellt, dass der Einsatz von höheren Anteilen an Cer und Zinn als aus dem Stand der Technik bekannt dazu führt, dass sich die Fluoreszenzeigenschaften von Gläsern verändern. Insbesondere hat sich gezeigt, dass durch den Einsatz höherer Anteile an Cer und Zinn, eine deutlich sichtbare Fluoreszenz auch bei Anregung mit Licht einer Wellenlänge von 380 bis 430 nm zu erzielt werden kann. Die erfindungsgemäßen Gläser haben sich daher als besonders geeignet zur Nachahmung des natürlichen Zahnmaterials erwiesen.

Ohne Beschränkung auf eine bestimmte Theorie wird angenommen, dass sich durch die Verwendung größerer Mengen an Cer und Zinn die Fluoreszenzeigenschaften der Ce³⁺-Ionen verändern und sich das Anregungsspektrum verschiebt, so dass auch bei einer Anregung mit Licht einer Wellenlänge im Bereich von 380 bis 430 nm, wie z.B. 395 nm, in Gläsern eine deutliche Fluoreszenz wahrgenommen werden kann. Die in den erfindungsgemäßen Gläsern beobachtete hohe Intensität der Fluoreszenz bei Anregung mit Licht einer Wellenlänge von 380 bis 430 nm ist überraschend, weil die aus dem Stand der Technik bekannten Gläser, wie insbesondere die in der EP 3 696 149 beschriebenen Gläser keine wahrnehmbare Fluoreszenz bei entsprechender Anregung zeigen.

Das erfindungsgemäße Glas enthält vorzugsweise 4,3 bis 22,0, insbesondere 4,7 bis 21,5 und besonders bevorzugt 5,3 bis 21,0 Gew.-% Cer, berechnet als CeO₂.

Es ist auch bevorzugt, dass das Glas 3,4 bis 17,2, insbesondere 3,7 bis 16,9 und besonders bevorzugt 4,1 bis 16,4 Gew.-% Zinn, berechnet als SnO, enthält.

Erfindungsgemäß ist außerdem ein Glas bevorzugt, in dem das molare Verhältnis von Cer, berechnet als CeO₂, zu Zinn, berechnet als SnO, im Bereich von 1,5:1 bis 1:5, insbesondere 1,2:1 bis 1:1,2, weiter bevorzugt 1,1:1 bis 1:1,1 liegt und besonders bevorzugt 1,0:1,0 beträgt.

Erfindungsgemäß ist es auch bevorzugt, dass das Glas 40,0 bis 65,0 und besonders bevorzugt 42,0 bis 62,0 Gew.-% SiO₂ enthält.

Es ist auch bevorzugt, dass das Glas 1,4 bis 4,0 und besonders bevorzugt 1,9 bis 3,1 Gew.-% Li₂O enthält.

In einer weiteren bevorzugten Ausführungsform enthält das Glas 0,4 bis 2,4, insbesondere 0,6 bis 1,9 und besonders bevorzugt 0,8 bis 1,6 Gew.-% Fluor.

In einer bevorzugten Ausführungsform enthält das Glas 6,9 bis 14,7 und insbesondere 7,7 bis 13,9 Gew.-% Alkalimetalloxid Me^{I}₂O, wobei Me^{I}₂O ausgewählt ist aus Na₂O, K₂O, Rb₂O und/oder Cs₂O und insbesondere aus Na₂O und/oder K₂O.

Vorzugsweise enthält das erfindungsgemäße Glas mindestens eines und insbesondere alle der folgenden Alkalimetalloxide Me^{I}₂O in den angegebenen Mengen:

| Komponente | | Gew.-% |
|---|---|---|
| K₂O | | 2,0 bis 7,9 |
| | insbesondere | 2,5 bis 7,3 |
| | besonders bevorzugt | 2,9 bis 6,9 |
| Na₂O | | 3,8 bis 8,0 |
| | insbesondere | 4,4 bis 7,4 |
| | besonders bevorzugt | 4,8 bis 7,0. |

In einer weiteren bevorzugten Ausführungsform enthält das Glas 4,2 bis 8,8 und insbesondere 5,1 bis 7,7 Gew.-% Oxid zweiwertiger Elemente Me"O, wobei Me"O ausgewählt ist aus MgO, CaO, SrO, BaO und/oder ZnO und bevorzugt aus MgO, CaO, SrO und/oder ZnO.

Es ist besonders bevorzugt, dass das Glas mindestens eines und insbesondere alle der folgenden Oxide zweiwertiger Elemente Me^{II}O in den angegebenen Mengen enthält:

| Komponente | | Gew.-% |
|---|---|---|
| CaO | | 0,8 bis 2,5 |
| | insbesondere | 1,0 bis 2,0 |
| | besonders bevorzugt | 1,2 bis 1,7 |
| SrO | | 1,0 bis 3,0 |
| | insbesondere | 1,3 bis 2,6 |
| | besonders bevorzugt | 1,6 bis 2,3 |
| ZnO | | 1,4 bis 4,0 |
| | insbesondere | 1,9 bis 3,6 |
| | besonders bevorzugt | 2,3 bis 3,3 |
| MgO | | 0 bis 1,0 |
| | vorzugsweise | 0 bis 0,6 |
| | insbesondere | 0 bis 0,4 |
| | besonders bevorzugt | 0,1 bis 0,4. |

Es ist auch bevorzugt, dass das Glas 4,1 bis 10,9 und insbesondere 4,8 bis 10,0 Gew.-% Oxid dreiwertiger Elemente Me^{III}₂O₃ enthält, wobei Me^{III}₂O₃ ausgewählt ist aus Al₂O₃, B₂O₃, Y₂O₃, La₂O₃, Dy₂O₃, Ga₂O₃ und/oder In₂O₃ und bevorzugt aus Al₂O₃ und/oder B₂O₃.

In einer besonders bevorzugten Ausführungsform enthält das Glas mindestens eines und insbesondere alle der folgenden Oxide dreiwertiger Elemente Me^{III}₂O₃ in den angegebenen Mengen:

| Komponente | | Gew.-% |
|---|---|---|
| Al₂O₃ | | 2,5 bis 7,3 |
| | insbesondere | 2,8 bis 6,8 |
| | besonders bevorzugt | 3,2 bis 6,3 |
| B₂O₃ | | 1,0 bis 4,5 |
| | insbesondere | 1,3 bis 4,1 |
| | besonders bevorzugt | 1,6 bis 3,7. |

Bevorzugt ist auch, dass das Glas zudem 0,1 bis 3,4, insbesondere 0,2 bis 2,6 und besonders bevorzugt 0,4 bis 2,0 Gew.-% Oxid vierwertiger Elemente Me^{IV}O₂ enthält, wobei Me^{IV}O₂ ausgewählt ist aus ZrO₂, TiO₂ und/oder GeO₂ und vorzugsweise aus ZrO₂ und/oder TiO₂.

Besonders bevorzugt enthält das Glas mindestens eines und insbesondere alle der folgenden Oxide vierwertiger Elemente Me^{IV}O₂ in den angegebenen Mengen:

| Komponente | | Gew.-% |
|---|---|---|
| TiO₂ | | 0 bis 2,2 |
| | insbesondere | 0 bis 1,7 |
| | besonders bevorzugt | 0,1 bis 1,4 |
| ZrO₂ | | 0 bis 1,2 |
| | vorzugsweise | 0,1 bis 1,2 |
| | insbesondere | 0,2 bis 0,9 |
| | besonders bevorzugt | 0,4 bis 0,6. |

In einer bevorzugten Ausführungsform enthält das Glas ferner Oxid fünfwertiger Elemente Me^{V}₂O₅ in einer Menge von 0 bis 10,0, insbesondere 0 bis 8,0, bevorzugt 1,0 bis 7,0, weiter bevorzugt 2,0 bis 6,8 und besonders bevorzugt 3,0 bis 6,5 Gew.-% wobei dieses Me^{V}₂O₅ insbesondere ausgewählt ist aus P₂O₅, Ta₂O₅ und/oder Nb₂O₅ und besonders bevorzugt ausgewählt ist aus P₂O₅ und/oder Ta₂O₅.

Erfindungsgemäß ist es bevorzugt, dass das Glas mindestens eine und bevorzugt alle der folgenden Komponenten in den angegebenen Mengen enthält:

| Komponente | Gew.-% |
|---|---|
| SiO₂ | 38,0 bis 68,0 |
| Cer, berechnet als CeO₂ | 4,0 bis 23,0 |
| Zinn, berechnet als SnO | 3,0 bis 18,0 |
| Li₂O | 1,0 bis 5,0 |
| Al₂O₃ | 2,5 bis 7,3 |
| Na₂O | 3,8 bis 8,0 |
| K₂O | 2,0 bis 7,9 |
| CaO | 0,8 bis 2,5 |
| SrO | 1,0 bis 3,0 |
| ZnO | 1,4 bis 4,0 |
| B₂O₃ | 1,0 bis 4,5 |
| F | 0,4 bis 2,4 |
| ZrO₂ | 0 bis 1,2 |
| MgO | 0 bis 1,4 |
| TiO₂ | 0 bis 3,0. |

Es ist weiter bevorzugt, dass das Glas mindestens eine und bevorzugt alle der folgenden Komponenten in den angegebenen Mengen enthält:

| Komponente | Gew.-% |
|---|---|
| SiO₂ | 40,0 bis 65,0 |
| Cer, berechnet als CeO₂ | 4,3 bis 22,0 |
| Zinn, berechnet als SnO | 3,4 bis 18,0 |
| Li₂O | 1,4 bis 4,0 |
| Al₂O₃ | 2,8 bis 6,8 |
| Na₂O | 4,4 bis 7,4 |
| K₂O | 2,5 bis 7,3 |
| CaO | 1,0 bis 2,0 |
| SrO | 1,3 bis 2,6 |
| ZnO | 1,9 bis 3,6 |
| B₂O₃ | 1,3 bis 4,1 |
| F | 0,6 bis 1,9 |
| ZrO₂ | 0,2 bis 0,9 |
| MgO | 0 bis 0,8 |
| TiO₂ | 0 bis 2,0. |

In einer besonders bevorzugten Ausführungsform enthält das Glas mindestens eine und bevorzugt alle der folgenden Komponenten in den angegebenen Mengen:

| Komponente | Gew.-% |
|---|---|
| SiO₂ | 42,0 bis 62,0 |
| Cer, berechnet als CeO₂ | 4,7 bis 21,0 |
| Zinn, berechnet als SnO | 3,7 bis 17,2 |
| Li₂O | 1,9 bis 3,1 |
| Al₂O₃ | 3,2 bis 6,3 |
| Na₂O | 4,8 bis 7,0 |
| K₂O | 2,9 bis 6,9 |
| CaO | 1,2 bis 1,7 |
| SrO | 1,6 bis 2,3 |
| ZnO | 2,3 bis 3,3 |
| B₂O₃ | 1,6 bis 3,7 |
| F | 0,8 bis 1,6 |
| ZrO₂ | 0,4 bis 0,6 |
| MgO | 0 bis 0,4 |
| TiO₂ | 0 bis 1,4. |

Die Erfindung betrifft ferner ein erfindungsgemäßes Glas, das bei Anregung mit Licht einer Wellenlänge von 380 bis 430 nm, insbesondere 395 nm, eine weißlich-blaue Fluoreszenzfarbe im CIE-Farbraum aufweist.

Die Erfindung betrifft auch ein Verfahren zur Herstellung des erfindungsgemäßen Glases, bei dem das Zinn in zweiwertiger Form und insbesondere als SnO eingesetzt wird.

Bei der Herstellung des erfindungsgemäßen Glases wird insbesondere eine Mischung von geeigneten Ausgangsmaterialien, wie z.B. Carbonaten, Oxiden, Phosphaten und Fluoriden, erschmolzen. In einer bevorzugten Ausführungsform werden die Ausgangsmaterialien der Komponenten des Glases bei einer Temperatur von 1400 bis 1700°C, insbesondere 1450 bis 1600°C und besonders bevorzugt 1500°C für vorzugsweise 20 min bis 10 h erschmolzen.

Die Schmelze kann dann in Wasser gegeben werden, um ein Granulat herzustellen. Zur Erzielung einer besonders hohen Homogenität kann das Granulat nochmals aufgeschmolzen werden und die Schmelze wiederum zur Bildung eines Glasgranulats in Wasser gegeben werden.

Es ist bevorzugt, dass ein Glasgranulat zu einem Pulver zerkleinert wird, z.B. durch Mahlen mit einer Zirkonoxidmühle. Diesem Pulver können weitere Komponenten, wie Färbemittel, zugegeben werden. Aus dem Pulver kann dann beispielsweise eine Pulvermischung, eine Paste oder ein Aerosol hergestellt werden. Die erfindungsgemäßen Gläser liegen daher bevorzugt als Granulat, Pulver, Paste oder Aerosol vor.

Die vorstehend beschriebenen Gläser können auch als Mischungskomponente zur Beimischung zu anderen Gläsern und Glaskeramiken und bevorzugt zu anderen Gläsern verwendet werden.

Ein Glas und eine Glaskeramik, die das erfindungsgemäße Glas enthalten, stellen daher einen weiteren Gegenstand der Erfindung dar. Besonders bevorzugt sind dabei ein Glas und eine Glaskeramik, die das erfindungsgemäße Glas mit hohem Gehalt an Cer und Zinn in einer Menge von 0,1 bis 60 Gew.-%, insbesondere 1 bis 58 Gew.-%, bevorzugt 5 bis 56 Gew.-%, besonders bevorzugt 10 bis 54 Gew.-% und ganz besonders bevorzugt 5 bis 52 Gew.-% enthalten, bezogen auf die Gesamtmenge von Glas oder Glaskeramik und erfindungsgemäßem Glas. Die Erfindung betrifft auch die Verwendung der erfindungsgemäßen Gläser mit hohem Gehalt an Cer und Zinn als Mischungskomponente zur Einstellung der Fluoreszenz eines Glases und einer Glaskeramik.

Das erfindungsgemäße Glas mit hohem Gehalt an Cer und Zinn kann insbesondere in Kombination mit einer Vielzahl von anderen Gläsern und Glaskeramiken verwendet werden, wobei die Kombinationen insbesondere als Dentalmaterialien eingesetzt werden können. Es ist bevorzugt, das erfindungsgemäße Glas in Kombination mit anderen Gläsern zu verwenden. Besonders bevorzugt können die Kombinationen in Form von Granulaten, Pulvern, Pasten, Aerosolen oder Beschichtungen dentaler Restaurationen vorliegen. Beispiele anderer Gläser zur Herstellung von Kombinationen sind in DE 43 14 817 A1, DE 44 23 793 C1, DE 44 23 794 C1, DE 44 28 839 A1, DE 196 47 739 A1, DE 197 25 552 A1, DE 100 31 431 A1, EP 0 827 941 A1, EP 0 916 625 A1, WO 00/34196 A2, EP 1 505 041 A1, EP 1 688 398 A1, EP 2 287 122 A1, EP 2 377 831 A1, EP 2 407 439 A1, WO 2013/053863 A2, WO 2013/053864 A2, WO 2013/053865 A2, WO 2013/053866 A2, WO 2013/053867 A2, WO 2013/053868 A2, WO 2013/164256 A1, WO 2014/170168 A1, WO 2014/170170 A2, WO 2015/067643 A1, WO 2015/155038 A1, WO 2015/173394 A1, WO 2016/120146 A1, WO 2017/032745 A1, WO 2017/055010 A1 offenbart. Diese Gläser gehören zur Silikat-, Borat-, Phosphat- oder Alumosilikat-Gruppe. Bevorzugte Gläser sind vom SiO₂-Al₂O₃-K₂O-Typ, SiO₂-B₂O₃-Na₂O-Typ, Alkali-Silikat-Typ, Alkali-Zink-Silikat-Typ, Silico-Phosphat-Typ und/oder SiO₂-ZrO₂-Typ. Bevorzugte Glaskeramiken für die Beimischung der erfindungsgemäßen Gläser zur Herstellung Kombinationen sind Apatit-haltige Glaskeramiken. Durch Vermischen derartiger Gläser und Glaskeramiken mit den erfindungsgemäßen Gläsern mit hohem Gehalt an Cer und Zinn können insbesondere die Fluoreszenzeigenschaften in gewünschter Weise eingestellt werden.

Die erfindungsgemäßen Glaskeramiken und die erfindungsgemäßen Gläser, insbesondere in Form von Kombinationen, eignen sich zur Beschichtung, besonders von z.B. Keramiken, Glaskeramiken und Metallen. Unter "Beschichtungen", die unter Verwendung der erfindungsgemäßen Gläser und erfindungsgemäßen Glaskeramiken, insbesondere in Form von Kombinationen, hergestellt werden können, sind z.B. auch Glasuren zu verstehen.

Die Erfindung ist daher ebenfalls auf die Verwendung des erfindungsgemäßen Glases und der erfindungsgemäßen Glaskeramik, insbesondere in Form von Kombinationen, zur Beschichtung von insbesondere Keramiken, Glaskeramiken und Metallen gerichtet. Das Beschichten umfasst vorzugsweise, dass erfindungsgemäßes Glas oder erfindungsgemäße Glaskeramik, insbesondere in Form von Kombinationen, auf ein Substratmaterial aufgebracht und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird.

Aufgrund der vorstehend geschilderten Eigenschaften der erfindungsgemäßen Gläser eignen sich diese insbesondere für den Einsatz in der Zahnheilkunde. Gegenstand der Erfindung ist daher auch die Verwendung der erfindungsgemäßen Gläser, insbesondere in Form von Kombinationen, als Dentalmaterial.

Die erfindungsgemäßen Gläser, insbesondere in Form von Kombinationen, können verwendet werden, um dentale Restaurationen, insbesondere Inlays, Onlays, Kronen, Teilkronen, Brücken, Veneers, Schalen oder Abutments, zu beschichten. Die erfindungsgemäßen Gläser können daher auch als Beschichtung einer dentalen Restauration vorliegen.

Die Erfindung betrifft auch die Verwendung der erfindungsgemäßen Gläser zur Beschichtung einer dentalen Restauration, wobei ein Substratmaterial, insbesondere eine Glaskeramik, eine Keramik oder ein Metall, mit dem erfindungsgemäßen Glas beschichtet wird.

Die Verwendung zur Beschichtung einer dentalen Restauration umfasst vorzugsweise, dass das erfindungsgemäße Glas, insbesondere in Form einer Kombination, auf ein Substratmaterial aufgebracht und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird. Das Aufbringen des erfindungsgemäßen Glases, insbesondere in Form einer Kombination, erfolgt dabei in üblicher Weise, z.B. als Pulver, Paste oder Aerosol. Vorzugsweise ist das Substratmaterial eine Glaskeramik, eine Keramik oder ein Metall.

Die Erfindung ist ebenfalls auf ein Verfahren zu Beschichtung einer dentalen Restauration gerichtet, bei dem ein Substratmaterial, insbesondere eine Glaskeramik, eine Keramik oder ein Metall, mit dem erfindungsgemäßen Glas beschichtet wird. Das Glas kann erfindungsgemäß auch in Kombination mit einem Glas oder einer Glaskeramik, wie z.B. einer Apatit-haltigen Glaskeramiken, vorliegen.

Das Verfahren zur Beschichtung einer dentalen Restauration umfasst vorzugsweise, dass das erfindungsgemäße Glas, insbesondere in Form einer Kombination, auf ein Substratmaterial aufgebracht und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird. Das Aufbringen des erfindungsgemäßen Glases, insbesondere in Form einer Kombination, erfolgt dabei in üblicher Weise, z.B. als Pulver, Paste oder Aerosol. Vorzugsweise ist das Substratmaterial eine Glaskeramik, eine Keramik oder ein Metall.

Es ist bevorzugt, dass die Beschichtung einer dentalen Restauration im Rahmen der Herstellung einer beschichteten dentalen Restauration, insbesondere ausgewählt aus Inlay, Onlay, Krone, Teilkrone, Brücke, Veneer, Schale und Abutment, erfolgt.

Gegenstand der Erfindung ist mithin die Verwendung der erfindungsgemäßen Gläser bei der Herstellung einer beschichteten dentalen Restauration, wobei ein Substratmaterial, insbesondere eine Glaskeramik, eine Keramik oder ein Metall, mit dem erfindungsgemäßen Glas beschichtet wird.

Außerdem ist die Erfindung auf ein Verfahren zur Herstellung einer beschichteten dentalen Restauration gerichtet, bei dem ein Substratmaterial, insbesondere eine Glaskeramik, eine Keramik oder ein Metall, mit dem erfindungsgemäßen Glas beschichtet wird.

Die Erfindung wird im Folgenden anhand von sie nicht beschränkenden Beispielen näher erläutert.

### Beispiele

### 1. Herstellung von fluoreszierenden Gläsern

Es wurden 10 erfindungsgemäße Gläser mit den in der Tabelle I angegebenen Zusammensetzungen hergestellt. Dazu wurden zunächst Ausgangsgläser mit den in der Tabelle I angegebenen Zusammensetzungen aus üblichen Rohstoffen bei 1500°C für 60 min erschmolzen. Durch Eingießen der erschmolzenen Ausgangsgläser in Wasser wurden Glasfritten hergestellt.

Für die erfindungsgemäßen Gläser 1, 2, 4 und 8 wurde die in der Tabelle angegebene Glasübergangstemperatur T_{g} mittels DSC (Differential Scanning Calorimetry) bestimmt.

Zusätzlich wurden zwei Gläser als Vergleichsbeispiele nach einem entsprechenden Verfahren hergestellt. Die Zusammensetzungen dieser Gläser sind als Beispiele 11 und 12 ebenfalls in der Tabelle I angegeben. Abweichend vom Verfahren zur Herstellung der Gläser der Beispiele 1 bis 10 erfolgte das Erschmelzen zur Herstellung von Beispiel 11 bei 1650°C für 240 min.

Die Fluoreszenzeigenschaften der Glasfritten wurden untersucht. Dazu wurden die Glasfritten nacheinander mit einer Quecksilberdampflampe (Anregungswellenlänge 365 nm) und mit einer UV-LED (Anregungswellenlänge 395 nm) bestrahlt und jeweils mit bloßem Auge auf Fluoreszenz untersucht.

Für die Glasfritten der Beispiele 1 bis 10 konnte sowohl bei Anregung mit der Quecksilberdampflampe als auch bei Anregung mit der UV-LED jeweils eine deutliche Fluoreszenz wahrgenommen werden.

Die Glasfritte des Beispiels 11 zeigte eine deutlich wahrnehmbare Fluoreszenz bei Bestrahlung mit der Quecksilberdampflampe (Anregungswellenlänge 365 nm). Es konnte jedoch keine Fluoreszenz bei Anregung mit der UV-LED (Anregungswellenlänge 395 nm) wahrgenommen werden. Bei der Untersuchung der Glasfritte von Beispiels 12 wurde weder bei Bestrahlung mit der Quecksilberdampflampe noch bei Bestrahlung mit der UV-LED Fluoreszenz beobachtet.

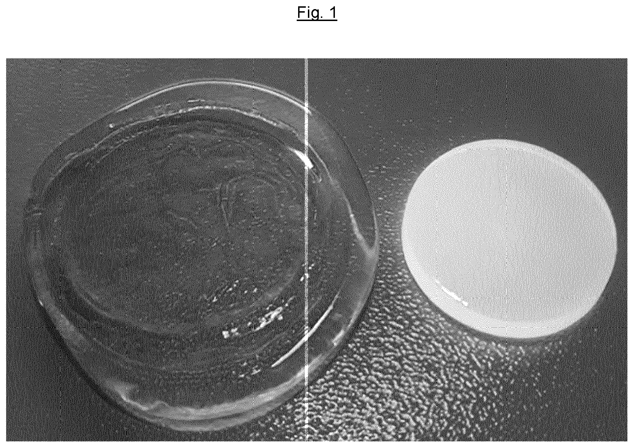

Die Glasfritte von Beispiel 2 wurde in einer Zirkonoxidmühle auf eine Korngröße von 45 µm aufgemahlen und bei 760°C für eine Haltezeit von 1 min gesintert. Der so erhaltene Glaskörper zeigte bei Bestrahlung mit der UV-LED (Anregungswellenlänge 395 nm) eine deutlich wahrnehmbare weißlich-blaue Fluoreszenz. Dies wird auch durch das als Figur 1 gezeigte Foto veranschaulicht. Der in Figur 1 rechts dargestellte Körper ist der fluoreszierende Glaskörper bei Bestrahlung mit der UV-LED.

Zum Vergleich wurde eine Massivglasscheibe aus der Glasfritte von Beispiel 11 hergestellt, indem das in der EP 3 696 149 A1 für das dortige Beispiel 5 beschriebene Verfahren angewendet wurde. Das Verfahren umfasste, dass die Glasfritte von Beispiel 11 für 240 min bei 1650°C erneut aufgeschmolzen wurde. Die erhaltene Schmelze wurde anschließend auf einen Kupferblock gegossen, um eine Massivglasscheibe zu erzeugen. Diese Massivglasscheibe wurde dann auf seine Fluoreszenz bei Bestrahlung mit der UV-LED (Anregungswellenlänge 395 nm) untersucht. Die Ergebnisse werden ebenfalls durch Figur 1 veranschaulicht. Der linke Körper in Figur 1 ist die erhaltene Massivglasscheibe, die bei Bestrahlung mit der UV-LED keine Fluoreszenz zeigt.

**Tabelle I**

| **Beispiel** | **1** | **2** | **3** | **4** | **5** | **6** | **7** | **8** | **9** | **10** | **11*** | **12*** |
|---|---|---|---|---|---|---|---|---|---|---|---|---|
| Zusammensetzung | Gew.-% | Gew.-% | Gew.-% | Gew.-% | Gew.-% | Gew.-% | Gew.-% | Gew.-% | Gew.-% | Gew.-% | Gew.-% | Gew.-% |
| *SiO₂* | 60,5 | 56,2 | 53,5 | 50,8 | 48,4 | 46,2 | 44,1 | 42,0 | 60,3 | 61,2 | 63,7 | 64,9 |
| *CeO₂* | 4,1 | 7,9 | 10,2 | 12,4 | 14,5 | 16,4 | 18,3 | 20,1 | 4,0 | 4,0 | 7,3 | 0,6 |
| *SnO* | 3,2 | 6,1 | 8,0 | 9,7 | 11,3 | 12,9 | 14,3 | 15,7 | 3,1 | 3,2 | 2,8 | - |
| *Al₂O₃* | 4,7 | 4,3 | 4,1 | 3,9 | 3,8 | 3,6 | 3,4 | 3,2 | 6,2 | 6,3 | 5,4 | 5,0 |
| *P₂O₅* | - | - | - | - | - | - | - | - | - | - | - | - |
| *Li₂O* | 3,1 | 2,9 | 2,7 | 2,6 | 2,5 | 2,4 | 2,2 | 2,1 | 1,9 | 2,0 | 15,8 | 3,3 |
| *Na₂O* | 7,0 | 6,5 | 6,1 | 5,9 | 5,6 | 5,3 | 5,1 | 4,8 | 6,3 | 6,4 | - | 7,5 |
| *K₂O* | 4,2 | 3,9 | 3,7 | 3,6 | 3,4 | 3,2 | 3,1 | 2,9 | 6,8 | 6,9 | 5,0 | 4,6 |
| *MgO* | 0,4 | 0,4 | 0,4 | 0,4 | 0,3 | 0,3 | 0,3 | 0,3 | - | - | - | 0,6 |
| *CaO* | 1,7 | 1,6 | 1,5 | 1,4 | 1,3 | 1,3 | 1,2 | 1,2 | 1,2 | 1,2 | - | 1,8 |
| *SrO* | 2,3 | 2,1 | 2,0 | 1,9 | 1,8 | 1,7 | 1,6 | 1,6 | 2,1 | 2,1 | - | 2,4 |
| *ZnO* | 3,3 | 3,0 | 2,9 | 2,7 | 2,6 | 2,5 | 2,4 | 2,3 | 2,9 | 2,9 | - | 3,5 |
| *B₂O₃* | 3,7 | 3,5 | 3,3 | 3,2 | 3,0 | 2,9 | 2,7 | 2,6 | 1,6 | 1,6 | - | 4,0 |
| *F-* | 1,2 | 1,1 | 1,1 | 1,0 | 1,0 | 0,9 | 0,9 | 0,8 | 1,6 | 1,6 | - | 1,3 |
| *TiO₂* | - | - | - | - | - | - | - | - | 1,4 | - | - | - |
| *ZrO₂* | 0,6 | 0,5 | 0,5 | 0,5 | 0,5 | 0,4 | 0,4 | 0,4 | 0,6 | 0,6 | - | 0,6 |
| Σ | 100,0 | 100,0 | 100,0 | 100,0 | 100,0 | 100,0 | 100,0 | 100,0 | 100,0 | 100,0 | 100,0 | 100,0 |
| T_{g}[°C] | 468,5 | 494,4 | - | 528,8 | - | - | - | 533,3 | - | - | - | - |

| | | | | | | | | | | | | |
|---|---|---|---|---|---|---|---|---|---|---|---|---|
| * Vergleich | | | | | | | | | | | | |

### 2. Verwendung der fluoreszierenden Gläser als Mischungskomponente

Die Glasfritten der Beispiele 1, 4 und 12 wurden in einer Zirkonoxidmühle auf eine Korngröße von 45-90 µm aufgemahlen. Anschließend wurden die gemahlenen Glasfritten der Beispiele 1 und 4 in unterschiedlichen Mengen (20, 33 und 50 Gew.-% bezogen auf die Mischung für die Glasfritte von Beispiel 1; 33 und 50 Gew.-% für die Glasfritte von Beispiel 4) als Mischungskomponente zu der nicht fluoreszierenden gemahlenen Glasfritte von Beispiel 12 gegeben.

Je 2,5 g der Pulvermischungen wurden mit 1,6 µl destilliertem Wasser gemischt und für 10 s bei 25 bar mittels einer Hydraulikpresse zu Pulverrohlingen gepresst und danach bei den in der Tabelle II angegebenen Temperaturen T_{Sinter} und Haltezeiten t_{Sinter} gesintert.

**Tabelle II**

| Anteil Mischungskomponente | Sinterbedingungen (T_{Sinter}, t_{Sinter}) | |
|---|---|---|
| | *Zugabe Bsp. 1 zu Bsp. 12* | *Zugabe Bsp. 4 zu Bsp. 12* |
| *20 Gew.-%* | 750°C, 1 min | - |
| *33 Gew.-%* | 770°C, 1 min | 730°C, 1 min |
| *50 Gew.-%* | 770°C, 1 min | 750°C, 1 min |

Nach dem Sintern wurden die Fluoreszenzeigenschaften der gesinterten Pulverrohlinge mit einer Quecksilberdampflampe (Anregungswellenlänge 365 nm) und mit einer UV-LED (Anregungswellenlänge 395 nm) untersucht. Die gesinterten Pulverrohlinge zeigten sowohl bei Bestrahlung mit der Quecksilberdampflampe als auch bei Bestrahlung mit der UV-LED eine deutlich wahrnehmbare Fluoreszenz. Es wurde festgestellt, dass sich durch die Verwendung eines hohen Anteils an fluoreszierender Mischungskomponente eine intensive Fluoreszenz erzielen lässt.

### 3. Herstellung von gesinterten Pulverpresslingen

Es wurden jeweils die Glasfritten der Beispiele 1, 2 und 4 in einer Zirkonoxidmühle auf eine Korngröße von 45-90 µm aufgemahlen. Je 2,5 g der erhaltenen Glaspulver wurden mit 1,6 µl destilliertem Wasser gemischt und für 10 s bei 25 bar mittels einer Hydraulikpresse zu Rohlingen verpresst und in einem Sinterofen bei einer Temperatur T_{Sinter} und einer Haltezeit von t_{Sinter} gesintert.

Die für die Herstellung der einzelnen Rohlinge verwendeten Sinterbedingungen T_{Sinter} und t_{Sinter} sind in Tabelle III angegeben.

**Tabelle III**

| **Glasfritte von Beispiel** | **1** | **2** | **4** |
|---|---|---|---|
| T_{Sinter} [°C] | 730 | 760 | 800 |
| t_{Sinter} [min] | 1 | 1 | 1 |

Die Fluoreszenz der erhaltenen Körper wurde unter einer Quecksilberdampflampe (Anregungswellenlänge 365 nm) und einer UV-LED (Anregungswellenlänge 395 nm) bestimmt. Alle gesinterten Gläser zeigten eine deutlich wahrnehmbare Fluoreszenz bei Bestrahlung mit der Quecksilberdampflampe und auch bei Bestrahlung mit der UV-LED.

## Patentansprüche

1. Glas mit Gehalt an Cer und Zinn, das die folgenden Komponenten in den angegebenen Mengen enthält:
| Komponente | Gew.-% |
|---|---|
| SiO₂ | 38,0 bis 68,0 |
| Cer, berechnet als CeO₂ | 4,0 bis 23,0 |
| Zinn, berechnet als SnO | 3,0 bis 18,0 |
| Li₂O | 1,0 bis 5,0 |
| Alkalimetalloxid Me^{I}₂O | 5,8 bis 15,9 |
| Oxid zweiwertiger Elemente Me^{II}O | 3,2 bis 10,5 |
| Oxid dreiwertiger Elemente Me^{II}₂O₃ | 3,5 bis 11,8, |
wobei
Me^{I}₂O ausgewählt ist aus Na₂O, K₂O, Rb₂O und/oder Cs₂O,
Me^{II}O ausgewählt ist aus MgO, CaO, SrO, BaO und/oder ZnO,
Me^{II}₂O₃ ausgewählt ist aus Al₂O₃, B₂O₃, Y₂O₃, La₂O₃, Dy₂O₃, Ga₂O₃, und/oder In₂O₃.

2. Glas nach Anspruch 1, das 4,3 bis 22,0, vorzugsweise 4,7 bis 21,5 und besonders bevorzugt 5,3 bis 21,0 Gew.-% Cer, berechnet als CeO₂, enthält.

3. Glas nach Anspruch 1 oder 2, das 3,4 bis 17,2, vorzugsweise 3,7 bis 16,9 und besonders bevorzugt 4,1 bis 16,4 Gew.-% Zinn, berechnet als SnO, enthält.

4. Glas nach einem der Ansprüche 1 bis 3, bei dem das molare Verhältnis von Cer, berechnet als CeO₂, zu Zinn, berechnet als SnO, im Bereich von 1,5:1 bis 1:1,5, insbesondere 1,2:1 bis 1:1,2, bevorzugt 1,1:1 bis 1:1,1 liegt und besonders bevorzugt 1,0: 1,0 beträgt.

5. Glas nach einem der Ansprüche 1 bis 4, das 1,4 bis 4,0 und besonders bevorzugt 1,9 bis 3,1 Gew.-% Li₂O enthält.

6. Glas nach einem der Ansprüche 1 bis 5, das 0,4 bis 2,4, insbesondere 0,6 bis 1,9 und besonders bevorzugt 0,8 bis 1,6 Gew-% Fluor enthält.

7. Glas nach einem der Ansprüche 1 bis 6, das mindestens eines und vorzugsweise alle der folgenden Alkalimetalloxide in den angegebenen Mengen enthält:
| Komponente | | Gew.-% |
|---|---|---|
| K₂O | | 2,0 bis 7,9 |
| | insbesondere | 2,5 bis 7,3 |
| | besonders bevorzugt | 2,9 bis 6,9 |
| Na₂O | | 3,8 bis 8,0 |
| | insbesondere | 4,4 bis 7,4 |
| | besonders bevorzugt | 4,8 bis 7,0. |

8. Glas nach einem der Ansprüche 1 bis 7, das mindestens eines und vorzugsweise alle der folgenden Oxide zweiwertiger Elemente Me^{II}O in den angegebenen Mengen enthält:
| Komponente | | Gew.-% |
|---|---|---|
| CaO | | 0,8 bis 2,5 |
| | insbesondere | 1,0 bis 2,0 |
| | besonders bevorzugt | 1,2 bis 1,7 |
| SrO | | 1,0 bis 3,0 |
| | insbesondere | 1,3 bis 2,6 |
| | besonders bevorzugt | 1,6 bis 2,3 |
| ZnO | | 1,4 bis 4,0 |
| | insbesondere | 1,9 bis 3,6 |
| | besonders bevorzugt | 2,3 bis 3,3 |
| MgO | | 0 bis 1,0 |
| | vorzugsweise | 0 bis 0,6 |
| | insbesondere | 0 bis 0,4 |
| | besonders bevorzugt | 0,1 bis 0,4. |

9. Glas nach einem der Ansprüche 1 bis 8, das mindestens eines und vorzugsweise alle der folgenden Oxide dreiwertiger Elemente in den angegebenen Mengen enthält:
| Komponente | | Gew.-% |
|---|---|---|
| Al₂O₃ | | 2,5 bis 7,3 |
| | insbesondere | 2,8 bis 6,8 |
| | besonders bevorzugt | 3,2 bis 6,3 |
| B₂O₃ | | 1,0 bis 4,5 |
| | insbesondere | 1,3 bis 4,1 |
| | besonders bevorzugt | 1,6 bis 3,7. |

10. Glas nach einem der Ansprüche 1 bis 9, das mindestens eines und vorzugsweise alle der folgenden Oxide vierwertiger Elemente Me^{IV}O₂ in den angegebenen Mengen enthält:
| Komponente | | Gew.-% |
|---|---|---|
| TiO₂ | | 0 bis 2,2 |
| | insbesondere | 0 bis 1,7 |
| | besonders bevorzugt | 0,1 bis 1,4 |
| ZrO₂ | | 0 bis 1,2 |
| | vorzugsweise | 0,1 bis 1,2 |
| | insbesondere | 0,2 bis 0,9 |
| | besonders bevorzugt | 0,4 bis 0,6. |

11. Glas nach einem der Ansprüche 1 bis 10, das Oxid fünfwertiger Elemente Me^{V}₂O₅ in einer Menge von 0 bis 10,0, insbesondere 0 bis 8,0, bevorzugt 1,0 bis 7,0, weiter bevorzugt 2,0 bis 6,8 und besonders bevorzugt 3,0 bis 6,5 Gew.-% enthält, wobei dieses Me^{V}₂O₅ insbesondere ausgewählt ist aus P₂O₅, Ta₂O₅ und/oder Nb₂O₅.

12. Glas nach einem der Ansprüche 1 bis 11, das mindestens eine und bevorzugt alle der folgenden Komponenten in den angegebenen Mengen enthält:
| Komponente | Gew.-% |
|---|---|
| SiO₂ | 38,0 bis 68,0 |
| Cer, berechnet als CeO₂ | 4,0 bis 23,0 |
| Zinn, berechnet als SnO | 3,0 bis 18,0 |
| Li₂O | 1,0 bis 5,0 |
| Al₂O₃ | 2,5 bis 7,3 |
| Na₂O | 3,8 bis 8,0 |
| K₂O | 2,0 bis 7,9 |
| CaO | 0,8 bis 2,5 |
| SrO | 1,0 bis 3,0 |
| ZnO | 1,4 bis 4,0 |
| B₂O₃ | 1,0 bis 4,5 |
| F | 0,4 bis 2,4 |
| ZrO₂ | 0 bis 1,2 |
| MgO | 0 bis 1,4 |
| TiO₂ | 0 bis 3,0. |

13. Glas und Glaskeramik, die das Glas mit Gehalt an Cer und Zinn gemäß einem der Ansprüche 1 bis 12 enthalten, vorzugsweise in einer Menge von 0,1 bis 60 Gew.-%, insbesondere 1 bis 58 Gew.-%, bevorzugt 5 bis 56 Gew.-%, besonders bevorzugt 10 bis 54 Gew.-% und ganz besonders bevorzugt 15 bis 52 Gew.-%.

14. Verfahren zur Herstellung des Glases gemäß einem der Ansprüche 1 bis 12, bei dem das Zinn mindestens teilweise in zweiwertiger Form und insbesondere als SnO eingesetzt wird.

15. Verfahren nach Anspruch 14, bei dem die Ausgangsmaterialien der Komponenten des Glases bei einer Temperatur von 1400°C bis 1700°C, insbesondere 1450 bis 1600°C und besonders bevorzugt 1500°C für vorzugsweise 20 min bis 10 h erschmolzen werden.

16. Verwendung des Glases gemäß einem der Ansprüche 1 bis 12 als Mischungskomponente zur Einstellung der Fluoreszenz eines Glases oder einer Glaskeramik.

17. Verwendung des Glases gemäß einem der Ansprüche 1 bis 13 als Dentalmaterial, insbesondere zur Beschichtung einer dentalen Restauration, wobei das Glas auf ein Substratmaterial aufgebracht und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird.

18. Verfahren zur Beschichtung einer dentalen Restauration, bei dem das Glas gemäß einem der Ansprüche 1 bis 13 auf ein Substratmaterial aufgebracht und zusammen mit dem Substratmaterial einer Wärmebehandlung, vorzugsweise bei einer Temperatur von mindestens 600°C, insbesondere 600 bis 1150°C und besonders bevorzugt bei 700 bis 1000°C, unterzogen wird.

## Claims

1. Glass containing cerium and tin, which comprises the following components in the amounts indicated:
| Component | wt.-% |
|---|---|
| SiO₂ | 38.0 to 68.0 |
| Cerium, calculated as CeO₂ | 4.0 to 23.0 |
| Tin, calculated as SnO | 3.0 to 18.0 |
| Li₂O | 1.0 to 5.0 |
| Alkali metal oxide Me^{I}₂O | 5.8 to 15.9 |
| Oxide of divalent elements Me^{II}O | 3.2 to 10.5 |
| Oxide of trivalent elements Me^{III}₂O₃ | 3.5 to 11.8, |
wherein
Me^{I}₂O is selected from Na₂O, K₂O, Rb₂O and/or Cs₂O,
Me^{II}O is selected from MgO, CaO, SrO, BaO and/or ZnO,
Me^{III}₂O₃ is selected from Al₂O₃, B₂O₃, Y₂O₃, La₂O₃, Dy₂O₃, Ga₂O₃ and/or In₂O₃.

2. Glass according to claim 1, which comprises 4.3 to 22.0, preferably 4.7 to 21.5 and particularly preferably 5.3 to 21.0 wt.-% cerium, calculated as CeO₂.

3. Glass according to claim 1 or 2, which comprises 3.4 to 17.2, preferably 3.7 to 16.9 and particularly preferably 4.1 to 16.4 wt.-% tin, calculated as SnO.

4. Glass according to any one of claims 1 to 3, wherein the molar ratio of cerium, calculated as CeO₂, to tin, calculated as SnO, is in the range of 1.5:1 to 1:1.5, in particular 1.2:1 to 1:1.2, preferably 1.1:1 to 1:1.1 and particularly preferably is 1.0:1.0.

5. Glass according to any one of claims 1 to 4, which comprises 1.4 to 4.0 and particularly preferably 1.9 to 3.1 wt.-% Li₂O.

6. Glass according to any one of claims 1 to 5, which comprises 0.4 to 2.4, in particular 0.6 to 1.9 and particularly preferably 0.8 to 1.6 wt.-% fluorine.

7. Glass according to any one of claims 1 to 6, which comprises at least one and preferably all of the following alkali metal oxides in the amounts indicated:
| Component | | wt.-% |
|---|---|---|
| K₂O | | 2.0 to 7.9 |
| | in particular | 2.5 to 7.3 |
| | particularly preferably | 2.9 to 6.9 |
| Na₂O | | 3.8 to 8.0 |
| | in particular | 4.4 to 7.4 |
| | particularly preferably | 4.8 to 7.0. |

8. Glass according to any one of claims 1 to 7, which comprises at least one and preferably all of the following oxides of divalent elements Me^{II}O in the amounts indicated:
| Component | | wt.-% |
|---|---|---|
| CaO | | 0.8 to 2.5 |
| | in particular | 1.0 to 2.0 |
| | particularly preferably | 1.2 to 1.7 |
| SrO | | 1.0 to 3.0 |
| | in particular | 1.3 to 2.6 |
| | particularly preferably | 1.6 to 2.3 |
| ZnO | | 1.4 to 4.0 |
| | in particular | 1.9 to 3.6 |
| | particularly preferably | 2.3 to 3.3 |
| MgO | | 0 to 1.0 |
| | preferably | 0 to 0.6 |
| | in particular | 0 to 0.4 |
| | particularly preferably | 0.1 to 0.4. |

9. Glass according to any one of claims 1 to 8, which comprises at least one and preferably all of the following oxides of trivalent elements in the amounts indicated:
| Component | | wt.-% |
|---|---|---|
| Al₂O₃ | | 2.5 to 7.3 |
| | in particular | 2.8 to 6.8 |
| | particularly preferably | 3.2 to 6.3 |
| B₂O₃ | | 1.0 to 4.5 |
| | in particular | 1.3 to 4.1 |
| | particularly preferably | 1.6 to 3.7. |

10. Glass according to any one of claims 1 to 9, which comprises at least one and preferably all of the following oxides of tetravalent elements Me^{IV}O₂ in the amounts indicated:
| Component | | wt.-% |
|---|---|---|
| TiO₂ | | 0 to 2.2 |
| | in particular | 0 to 1.7 |
| | particularly preferably | 0.1 to 1.4 |
| ZrO₂ | | 0 to 1.2 |
| | preferably | 0.1 to 1.2 |
| | in particular | 0.2 to 0.9 |
| | particularly preferably | 0.4 to 0.6. |

11. Glass according to any one of claims 1 to 10, which comprises oxide of pentavalent elements Me^{V}₂O₅ in an amount of 0 to 10.0, in particular 0 to 8.0, preferably 1.0 to 7.0, more preferably 2.0 to 6.8, and particularly preferably 3.0 to 6.5 wt.-%, wherein this Me^{V}₂O₅ is preferably selected from P₂O₅, Ta₂O₅ and/or Nb₂O₅.

12. Glass according to any one of claims 1 to 11, which comprises at least one and preferably all of the following components in the amounts indicated:
| Component | wt.-% |
|---|---|
| SiO₂ | 38.0 to 68.0 |
| Cerium, calculated as CeO₂ | 4.0 to 23.0 |
| Tin, calculated as SnO | 3.0 to 18.0 |
| Li₂O | 1.0 to 5.0 |
| Al₂O₃ | 2.5 to 7.3 |
| Na₂O | 3.8 to 8.0 |
| K₂O | 2.0 to 7.9 |
| CaO | 0.8 to 2.5 |
| SrO | 1.0 to 3.0 |
| ZnO | 1.4 to 4.0 |
| B₂O₃ | 1.0 to 4.5 |
| F | 0.4 to 2.4 |
| ZrO₂ | 0 to 1.2 |
| MgO | 0 to 1.4 |
| TiO₂ | 0 to 3.0. |

13. Glass and glass ceramic, which comprise the glass containing cerium and tin according to any one of claims 1 to 12, preferably in an amount of 0.1 to 60 wt.-%, in particular 1 to 58 wt.-%, preferably 5 to 56 wt.-%, particularly preferably 10 to 54 wt.-% and quite particularly preferably 15 to 52 wt.-%.

14. Process for preparing the glass according to any one of claims 1 to 12, wherein the tin is used at least partially in divalent form and in particular as SnO.

15. Process according to claim 14, wherein the starting materials of the components of the glass are melted at a temperature of 1400°C to 1700°C, in particular 1450 to 1600°C and particularly preferably 1500°C for preferably 20 min to 10 h.

16. Use of the glass according to any one of claims 1 to 12 as a mixing component for adjusting the fluorescence of a glass or glass ceramic.

17. Use of the glass according to any one of claims 1 to 13 as a dental material, in particular for coating a dental restoration, wherein the glass is applied to a substrate material and subjected together with the substrate material to a heat treatment, preferably at a temperature of at least 600°C, in particular 600 to 1150°C and particularly preferably 700 to 1000°C.

18. Process for coating a dental restoration, wherein the glass according to any one of claims 1 to 13 is applied to a substrate material and subjected together with the substrate material to a heat treatment, preferably at a temperature of at least 600°C, in particular 600 to 1150°C and particularly preferably 700 to 1000°C.

## Revendications

1. Verre à teneur en cérium et étain, qui contient les composants suivants dans les quantités indiquées :
| composant | % en poids |
|---|---|
| SiO₂ | 38,0 à 68,0 |
| cérium, exprimé en CeO₂ | 4,0 à 23,0 |
| étain, exprimé en SnO | 3,0 à 18,0 |
| Li₂O | 1,0 à 5,0 |
| oxyde de métal alcalin Me^{I}₂O | 5,8 à 15,9 |
| oxyde d'éléments bivalents Me^{II}O | 3,2 à 10,5 |
| oxyde d'éléments trivalents Me^{III}₂O₃ | 3,5 à 11,8, |
dans lequel
Me^{I}₂O est sélectionné parmi Na₂O, K₂O, Rb₂O et/ou CS₂O,
Me^{II}O est sélectionné parmi MgO, CaO, SrO, BaO et/ou ZnO,
Me^{III}₂O₃ est sélectionné parmi AI₂O₃, B₂O₃, Y₂O₃, La₂O₃, Dy₂O₃, Ga₂O₃ et/ou In₂O₃.

2. Verre selon la revendication 1, qui contient 4,3 à 22,0, de préférence 4,7 à 21,5 et particulièrement préférentiellement 5,3 à 21,0 % en poids de cérium, exprimé en CeO₂.

3. Verre selon la revendication 1 ou 2, qui contient 3,4 à 17,2, de préférence 3,7 à 16,9 et particulièrement préférentiellement 4,1 à 16,4 % en poids d'étain, exprimé en SnO.

4. Verre selon l'une quelconque des revendications 1 à 3, selon lequel le rapport molaire de cérium, exprimé en CeO₂, à l'étain, exprimé en SnO, se situe dans la plage de 1,5:1 à 1:1,5, en particulier 1,2:1 à 1:1,2, de préférence 1,1:1 à 1:1,1 et est particulièrement préférentiellement 1,0:1,0.

5. Verre selon l'une quelconque des revendications 1 à 4, qui contient 1,4 à 4,0 et particulièrement préférentiellement 1,9 à 3,1 % en poids de Li₂O.

6. Verre selon l'une quelconque des revendications 1 à 5, qui contient 0,4 à 2,4, en particulier 0,6 à 1,9 et particulièrement préférentiellement 0,8 à 1,6 % en poids de fluor.

7. Verre selon l'une quelconque des revendications 1 à 6, qui contient au moins un et de préférence tous les oxydes métalliques alcalins suivants dans les quantités indiquées :
| composant | | % en |
|---|---|---|
| K₂O | | 2,0 à 7,9 |
| | en particulier | 2,5 à 7,3 |
| | particulièrement préférentiellement | 2,9 à 6,9 |
| Na₂O | | 3, 8 à 8,0 |
| | en particulier | 4,4 à 7,4 |
| | particulièrement préférentiellement | 4,8 à 7,0. |

8. Verre selon l'une quelconque des revendications 1 à 7, qui contient au moins un et de préférence tous les oxydes d'éléments bivalents Me^{II}O suivants dans les quantités indiquées :
| composant | | % en |
|---|---|---|
| CaO | | 0,8 à 2,5 |
| | en particulier particulièrement | 1,0 à 2,0 |
| préférentiellement | | 1,2 à 1,7 |
| SrO | | 1,0 à 3,0 |
| | en particulier | 1,3 à 2,6 |
| | particulièrement | |
| préférentiellement | | 1,6 à 2,3 |
| ZnO | | 1,4 à 4,0 |
| | en particulier particulièrement | 1,9 à 3,6 |
| préférentiellement | | 2,3 à 3,3 |
| MgO | | 0 à 1,0 |
| | de préférence | 0 à 0,6 |
| | en particulier particulièrement | 0 à 0,4 |
| préférentiellement | | 0,1 à 0,4. |

9. Verre selon l'une quelconque des revendications 1 à 8, qui contient au moins un et de préférence tous les oxydes d'éléments trivalents suivants dans les quantités indiquées :
| composant | | % en |
|---|---|---|
| AI₂O₃ | | 2,5 à 7,3 |
| | en particulier particulièrement | 2,8 à 6,8 |
| préférentiellement | | 3,2 à 6,3 |
| B₂O₃ | | 1,0 à 4,5 |
| | en particulier particulièrement | 1,3 à 4,1 |
| | préférentiellement | 1,6 à 3,7. |

10. Verre selon l'une quelconque des revendications 1 à 9, qui contient au moins un et de préférence tous les oxydes d'éléments tétravalents Me^{IV}O2 suivants dans les quantités indiquées :
| composant | | % en |
|---|---|---|
| TiO₂ | | 0 à 2,2 |
| | en particulier particulièrement | 0 à 1,7 |
| préférentiellement | | 0,1 à 1,4 |
| ZrO₂ | | 0 à 1,2 |
| | de préférence | 0,1 à 1,2 |
| | en particulier | 0,2 à 0,9 |
| | particulièrement | |
| préférentiellement | | 0,4 à 0,6. |

11. Verre selon l'une quelconque des revendications 1 à 10, qui contient l'oxyde d'éléments pentavalents Me^{V}₂O₅ dans une quantité de 0 à 10,0, en particulier 0 à 8,0, de préférence 1,0 à 7,0, de manière davantage préférée 2,0 à 6,8 et particulièrement préférentiellement 3,0 à 6,5 % en poids, dans lequel ce Me^{V}₂O₅ est en particulier choisi parmi P₂O₅, Ta₂O₅ et/ou Nb₂O₅.

12. Verre selon l'une quelconque des revendications 1 à 11, qui contient au moins un et de préférence tous les composants suivants dans les quantités indiquées :
| composant | % en |
|---|---|
| SiO₂ | 38,0 à 68,0 |
| cérium, exprimé en CeO₂ | 4,0 à 23,0 |
| étain, exprimé en SnO | 3,0 à 18,0 |
| Li₂O | 1,0 à 5,0 |
| AI₂O₃ | 2,5 à 7,3 |
| Na₂O | 3,8 à 8,0 |
| K₂O | 2,0 à 7,9 |
| CaO | 0,8 à 2,5 |
| SrO | 1,0 à 3,0 |
| ZnO | 1,4 à 4,0 |
| B₂O₃ | 1,0 à 4,5 |
| F | 0,4 à 2,4 |
| ZrO₂ | 0 à 1,2 |
| MgO | 0 à 1,4 |
| TiO₂ | 0 à 3,0. |

13. Verre et vitrocéramique, qui contiennent le verre à teneur en cérium et en étain selon l'une quelconque des revendications 1 à 12, de préférence dans une quantité de 0,1 à 60 % en poids, en particulier 1 à 58 % en poids, de préférence 5 à 56 % en poids, particulièrement préférentiellement 10 à 54 % en poids et tout particulièrement préférentiellement 15 à 52 % en poids.

14. Procédé de fabrication du verre selon l'une quelconque des revendications 1 à 12, selon lequel l'étain est utilisé au moins partiellement sous forme bivalente et notamment en tant que SnO.

15. Procédé selon la revendication 14, selon lequel les matières premières des composants du verre sont fondues à une température de 1400 °C à 1700 °C, en particulier 1450 à 1600 °C et particulièrement préférentiellement de 1500 °C pendant de préférence 20 min à 10 h.

16. Utilisation du verre selon l'une quelconque des revendications 1 à 12 comme composant de mélange pour régler la fluorescence d'un verre ou d'une vitrocéramique.

17. Utilisation du verre selon l'une quelconque des revendications 1 à 13 en tant que matériau dentaire, en particulier pour le revêtement d'une restauration dentaire, dans laquelle le verre est appliqué sur un matériau de substrat et soumis conjointement avec le matériau de substrat à un traitement thermique, de préférence à une température d'au moins 600 °C, en particulier 600 à 1150 °C et particulièrement préférentiellement 700 à 1000 °C.

18. Procédé de revêtement d'une restauration dentaire, selon lequel le verre selon l'une quelconque des revendications 1 à 13 est appliqué sur un matériau de substrat et soumis conjointement avec le matériau de substrat à un traitement thermique, de préférence à une température d'au moins 600 °C, en particulier 600 à 1150 °C et particulièrement préférentiellement 700 à 1000 °C.
